# EUROPEAN PATENT APPLICATION

(11) **EP 3 118 108 A1**
(43) Date of publication of application: **18.01.2017**
(21) Application number: 16275099.6
(22) Date of filing: 12.07.2016
(51) Int. Cl.: B64C 25/40, B64C 25/42

(54) **AIRCRAFT LANDING GEAR**

(30) Priority: 14.07.2015 GR 20150100313; 19.08.2015 GB 201514709
(71) Applicant: Airbus Operations Limited, Bristol BS34 7PA (GB)
(72) Inventor: REES, John, Winterbourne, Bristol BS36 1QT (GB); IORDANIDIS, George, Filton, Bristol BS34 7PA (GB); YATES, Michael, Filton, Bristol BS34 7PA (GB)
(74) Representative: Burt, Matthew Thomas

(57) **Abstract**

A aircraft landing gear (100) for an aircraft, comprising a plurality of wheels (2a, 2b), an electrically powered drive system (6a, 6b) comprising a drive motor arranged to drive at least one of the plurality of wheels, and an electrically powered braking system (5a, 5b) comprising a brake arranged to brake at least one of the plurality of wheels. A power supply unit is arranged to provide a supply of power to the electrically powered drive system, and also to the electrically powered braking system.

## Description

### FIELD OF THE INVENTION

The present invention concerns aircraft landing gear. More particularly, but not exclusively, the invention concerns the supply of power to electrically powered braking systems and electrically powered wheel drive systems of an aircraft landing gear.

### BACKGROUND OF THE INVENTION

Braking systems for aircraft landing gear are conventionally hydraulically powered. While electrically powered braking systems are known, the increased weight they require, in particular for the power supply units/converters and conductors to transmit power to the brakes, means that conventionally hydraulically powered braking systems are often preferred.

It would be advantageous to provide aircraft landing gear comprising electrically powered braking systems in which the weight of the power supply units/converters and conductors required by the electrically powered braking system is reduced.

The present invention seeks to mitigate the above-mentioned problems. Alternatively or additionally, the present invention seeks to provide improved aircraft landing gear.

### SUMMARY OF THE INVENTION

In accordance with a first aspect of the invention, there is provided an aircraft landing gear for an aircraft, comprising:
a plurality of wheels;
an electrically powered drive system comprising a drive motor arranged to drive at least one of the plurality of wheels;
an electrically powered braking system comprising a brake arranged to brake at least one of the plurality of wheels;
a power supply unit arranged to provide a supply of power to the electrically powered drive system;
wherein the power supply unit is further arranged to provide a supply of power to the electrically powered braking system.

The wheels of aircraft landing gear are conventionally not driven, with taxiing of aircraft while on the ground being performed using thrust from the engines of the aircraft. However, the use of aircraft landing gear with electrically powered drive systems for taxiing aircraft when on the ground has recently been proposed. Such electrically powered drive systems generally have higher power requirements than electrically powered brake systems. As a result, the power supply unit, conductors and the like used by the electrically powered drive systems can advantageously be used by the electrically powered braking systems as well, without additional weight of separate power apparatus for the electrically powered braking systems being required.

Preferably, the power supply unit is arranged to receive a supply of power generated from the engines of the aircraft. Alternatively and/or additionally, the power supply unit is preferably arranged to receive a supply of power from a battery. The electrically powered braking system may be able to receive a supply of power from an alternative source than the power supply unit, as the power supply unit may be arranged to provide a supply of power only in the case that the engines of the aircraft are not running, as the wheels of aircraft landing gear should not be driven when the engines are running. However, it will be appreciated that in contrast, operation of the electrically powered braking system may be required when the engines are running.

The electrically powered braking system may comprise a brake control unit arranged to operate the brakes of the electrically powered braking system, wherein the brake control unit is arranged to receive a DC voltage power supply from the power supply unit. For example, the DC voltage power supply is a high-voltage 270V DC supply. This allows the electrically powered braking system to be a single line replaceable unit (LRU) which is easy to replace, and only require two conductors (for the DC voltage supply), in contrast to the multiple conductors that would be necessary if the electrically powered braking system required a multi-phase power supply, for example.

The electrically powered drive system may comprise a drive control unit arranged to operate the drive motor of the electrically powered drive system, wherein the drive control unit is arranged to receive a DC voltage power supply from the power supply unit. Alternatively, the electrically powered drive system may be arranged to receive a multi-phase AC voltage power supply from the power supply unit to operate the drive motor of the electrically powered drive system. The multi-phase AC voltage power supply may be a triple phase supply for a brushless motor, for example. Advantageously in this case, the power supply unit is arranged to be switchable between a first mode in which it supplies a DC voltage power supply to the electrically powered braking system, and a second mode in which it supplies a multi-phase AC voltage power supply to the electrically powered drive system. This allows the electrically powered braking system and electrically powered drive system to require different types of power supply, and is possible as the electrically powered braking system should not be activated at the same time as the electrically powered drive system.

The aircraft landing gear may comprise a plurality of electrically powered braking systems and a corresponding plurality of power supply units, wherein each electrically powered braking system of the plurality of electrically powered braking systems receives a supply of power from a respective power supply unit of the plurality of power supply units. The aircraft landing gear may also comprise a plurality of electrically powered drive systems. In this case, each drive system of the plurality of electrically powered drive systems may receive power from a first power supply unit of the plurality of power supply units. This allows advantages associated with an electrically powered braking system using the power supply unit of an electrically powered drive systems to be gained, while minimising the changes in the design of the electrically powered drive system that are required. Alternatively, each drive system of the plurality of electrically powered drive systems receives a supply of power from a respective power supply unit of the plurality of power supply units.

In accordance with a second aspect of the invention, there is provided an aircraft comprising an aircraft landing gear as described above.

In accordance with a third aspect of the invention, there is provided an aircraft comprising:
a power supply unit;
a first and a second aircraft landing gear, each of the first and second landing gear comprising:
   a plurality of wheels;
   an electrically powered drive system comprising a drive motor arranged to drive at least one of the plurality of wheels;
   an electrically powered braking system comprising a brake arranged to brake at least one of the plurality of wheels;
   wherein the power supply unit is further arranged to provide a supply of power to the electrically powered drive system of the first aircraft landing gear and to the electrically powered drive system of the second aircraft landing gear, and wherein the power supply unit is arranged to provide a supply of power to the electrically powered braking system of the first aircraft landing gear.

In this way, a single power supply unit can provide power to the electrically powered drive systems of both the first and second aircraft landing gear, and also to the electrically powered braking system of the first aircraft landing gear.

The power supply unit may be further arranged to provide a supply of power to the electrically powered braking system of the second aircraft landing gear.

The power supply unit may be arranged to receive a supply of power generated from the engines of the aircraft. Alternatively and/or additionally, the power supply unit may be arranged to receive a supply of power from a battery.

The electrically powered braking system may comprise a brake control unit arranged to operate the brakes of the electrically powered braking system, wherein the brake control unit is arranged to receive a DC voltage power supply from the power supply unit. The electrically powered drive systems of the first and second aircraft landing gear may each comprise a drive control unit arranged to operate their respective drive motors, wherein the drive control units are arranged to receive a DC voltage power supply from the power supply unit.

The electrically powered drive systems of the first and second aircraft landing gears may be arranged to receive a multi-phase AC voltage power supply from the power supply unit to operate the drive motors of the electrically powered drive systems. Advantageously in this case, the power supply unit is arranged to be switchable between a first mode in which it supplies a DC voltage power supply to the electrically powered braking system or electrically powered braking systems, and a second mode in which it supplies a multi-phase AC voltage power supply to the electrically powered drive systems.

It will of course be appreciated that features described in relation to one aspect of the present invention may be incorporated into other aspects of the present invention.

### DESCRIPTION OF THE DRAWINGS

Embodiments of the present invention will now be described by way of example only with reference to the accompanying schematic drawings of which:
Figure 1 is a schematic diagram of an aircraft landing gear system in accordance with an embodiment of the invention;
Figure 2 is a schematic diagram of an aircraft landing gear system in accordance with another embodiment of the invention;
Figure 3 is a schematic diagram of an aircraft landing gear system in accordance with another embodiment of the invention;
Figure 4 is a schematic diagram of an aircraft landing gear system in accordance with another embodiment of the invention;
Figure 5a is a close-up view of a portion of the aircraft landing gear system of Figure 4;
Figure 5b is a close-up view of the dual motor/brake drive of Figure 4 and 5a;
Figure 6 is a schematic diagram of an aircraft landing gear system in accordance with another embodiment of the invention;
Figure 7 is a schematic diagram of an aircraft landing gear system in accordance with another embodiment of the invention;
Figure 8 shows an aircraft incorporating an aircraft landing gear system in accordance with an embodiment of the invention.

### DETAILED DESCRIPTION

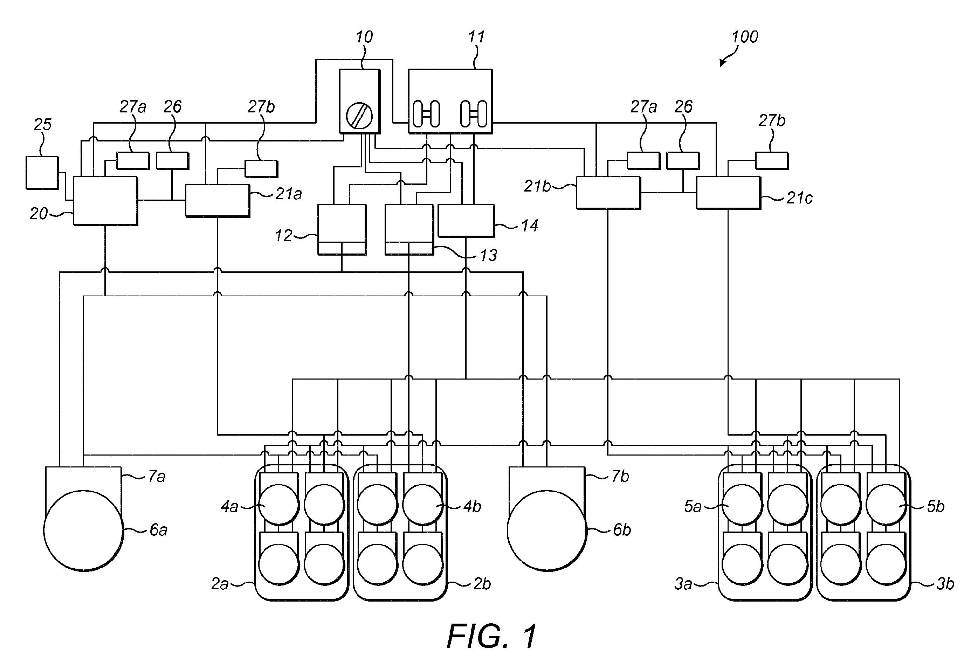

A schematic diagram of an aircraft landing gear system for an aircraft in accordance with an embodiment of the invention is now described with reference to Figure 1. The aircraft landing gear system 100 comprises a first set of wheels 2a and 2b, which are mounted on a leg (not shown) which is in turn mounted on the underside of the aircraft. The wheels 2a and 2b have respective electrically powered braking systems 4a and 4b, each of which comprises four brakes as shown in Figure 1. The wheels 2a and 2b are driven by an electrically powered drive system comprising a motor 6a and motor drive 7a.

The aircraft landing gear system 100 further comprises a second set of wheels 3a and 3b, with respective electrically powered braking systems 5a and 5b, and driven by an electrically powered drive system comprising a motor 6b and motor drive 7b.

The aircraft landing gear system 100 comprises a mode selector switch 10, which allows the pilot (or other person controlling the airplane) to select the mode of operation of the aircraft landing gear system 100. The modes of operation are OFF (in which the drive system and braking system are not operative), PARK (in which the braking systems 4a, 4b, 5a and 5b prevent the wheels 2a, 2b, 3a and 3b from moving), FWD (in which the drive system can drive the wheels 2a, 2b, 3a and 3b so that the aircraft is moved forwards) and RVS (in which the drive system can drive the wheels 2a, 2b, 3a and 3b so that the aircraft is moved backwards). When in modes FWD or RVS, movement of the aircraft via the aircraft landing gear system 100 can be controlled by the pilot using pedals 11.

The mode selector switch 10 and pedal 11 are in communication with a drive controller unit 12, which is in turn in communication via a data bus with the motor drives 7a and 7b, so that the motors 6a and 6b and hence the wheels 2a, 2b, 3a and 3b are driven accordingly. Similarly, the mode selector switch 10 and pedal 11 are in communication with a first brake controller unit 13, which is in turn in communication via a data bus with the braking systems 4a, 4b, 5a and 5b. The mode selector switch 10 and pedal 11 are also in communication with a second brake controller unit 13, which is in turn in communication via a data bus with the braking systems 4a, 4b, 5a and 5b. In use, the drive controller unit 12 and first brake controller unit 13 control the aircraft landing gear system 100 when the aircraft is taxiing on the ground and the engines are not running, while the second brake controller unit 13 controls the braking systems 4a, 4b, 5a and 5b of the aircraft landing gear system 100 when the aircraft the engines are running, in particular during landing of the aircraft.

A high-voltage 270V DC supply of power is supplied to the motor drives 7a and 7b by a first power supply unit (PSU) 20. The first PSU 20 takes as input an AC power supply 25 from an auxiliary power supply, i.e. a battery, which only provides power when the engines of the aircraft are not running. The first PSU 20 also takes as input an AC power supply 27a generated by a first of the engines of the aircraft when running (e.g. by means of a magneto or other suitable power generator). Finally, the first PSU 20 also takes as input the standard operating AC power supply 26 used by the aircraft's electrical systems. The first PSU 20 uses these inputted supplies of power as appropriate (and in particular when available) to generate the high-voltage 270V DC supply that is supplied to the motor drives 7a and 7b.

In addition, the high-voltage 270V DC supply generated by the first PSU 20 is supplied to the braking systems 4a and 4b, in particular to provide power for two of the four brakes of each of the braking systems 4a and 4b.

A high-voltage 270V DC supply of power is supplied by a second PSU 21a to the other two of the four brakes of each of the braking systems 4a and 4b. The second PSU 21 a takes an AC power supply 27b generated by a second of the engines of the aircraft when running. The second PSU 21 a also takes as input the standard operating AC power supply 26 used for the aircraft systems. The second PSU 21a uses these inputted supplies of power as appropriate and available to generate the high-voltage 270V DC supply that is supplied to the other two of the four brakes of each of the braking systems 4a and 4b.

Similarly, a high-voltage 270V DC supply of power is supplied to a first two of the four brakes of each of the braking systems 5a and 5b by a third PSU 21b, and to the other two of the four brakes of each of the braking systems 5a and 5b by a fourth PSU 21 c. The third PSU 21b takes an AC power supply 27a generated by the first of the engines of the aircraft when running, and the standard operating AC power supply 26 used for the aircraft systems. The fourth PSU 21c takes an AC power supply 27b generated by the second of the engines of the aircraft when running, and the standard operating AC power supply 26 used for the aircraft systems. Each of the third PSU 21b and fourth PSU 21c uses these inputted supplies of power as appropriate and available to generate the high-voltage 270V DC supply that is supplied to their respective two of the four brakes of each of the braking systems 5a and 5b.

Thus, it can be seen that each of the drive systems and brake systems is a line-replaceable unit (LRU) containing its own control system, and so requires for power only a high-voltage 270V DC supply, requiring only two conductors. As the drive system comprising the motor 6a and motor drive 7a requires a higher level of power than the braking systems 4a and 4b, and further as the brakes will not be used at the same time as the drive system is used, the braking systems 4a and 4b can use the same PSU 20 as the drive system, and also much of the same conductors, in particular those running down the leg of the aircraft landing gear. Advantageously, minimal changes to a standard electrically powered wheel drive system (i.e. configuration and arrangement of the drive systems, PSU 20, conductors and the like) are required.

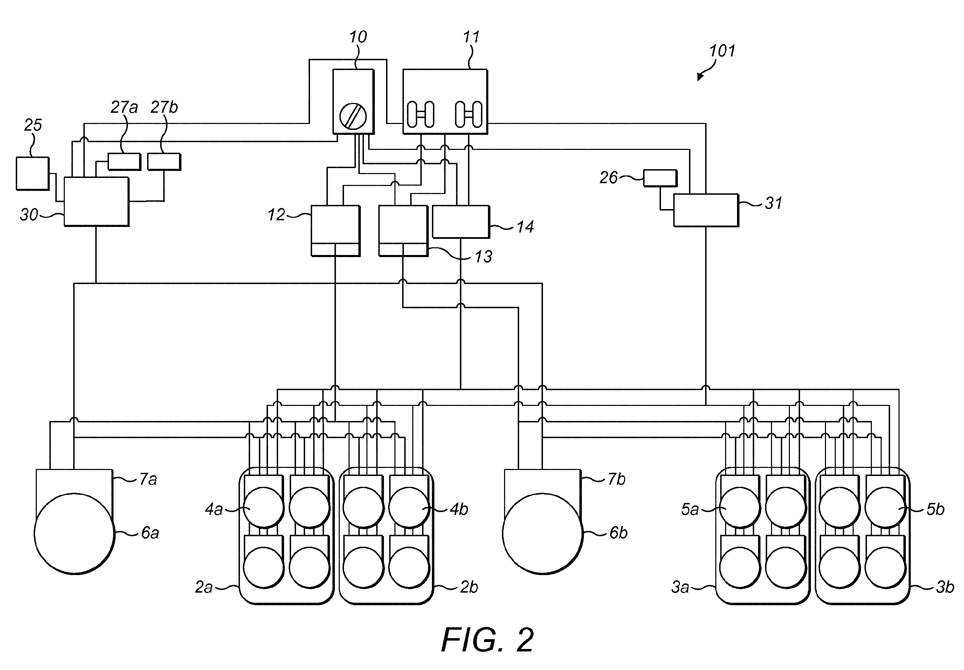

A schematic diagram of an aircraft landing gear system for an aircraft in accordance with another embodiment of the invention is now described with reference to Figure 2. The aircraft landing gear system 101 is similar to the aircraft landing gear system 100 of the previous embodiment, and comprises the same braking systems, drive systems, controls and the like.

In the present embodiment, the drive systems comprising the motor drives 7a and 7b are powered by a PSU 30, which again provides a high-voltage 270V DC supply. The PSU 30 receives as input the AC power supply 25 from the auxiliary power supply, the AC power supply 27a generated by the first of the engines of the aircraft when running, and also the AC power supply 27b generated by the second of the engines of the aircraft when running. The PSU 30 provides power to all four of the brakes of the braking systems 2a and 2b, and in addition to all four of the brakes of the braking systems 3a and 3b.

Each of the brakes of each of the braking systems 2a, 2b, 3a and 3b is also provided with power by a PSU 31, which receives as input the standard operating AC power supply 26 only.

In this way, only the two PSUs 30 and 31 are required to provide power for the whole aircraft landing gear system 101, taking advantage of the fact that the PSU 30 is able to provide sufficient power for the entire braking system, and allowing more conductors to be shared. As each of the PSUs 30 and 31 provides power to all of the brakes of the braking systems 2a, 2b, 3a and 3b, the two PSUs 30 and 31 provide redundancy, with braking still being available in the case that either PSU were to fail. However, a disadvantage over the previous embodiment is that the PSU 30 needs to be a dual channel PSU, and each of the braking systems 2a, 2b, 3a and 3b needs to be able to take as input two supplies of power, adding weight, cost and complexity.

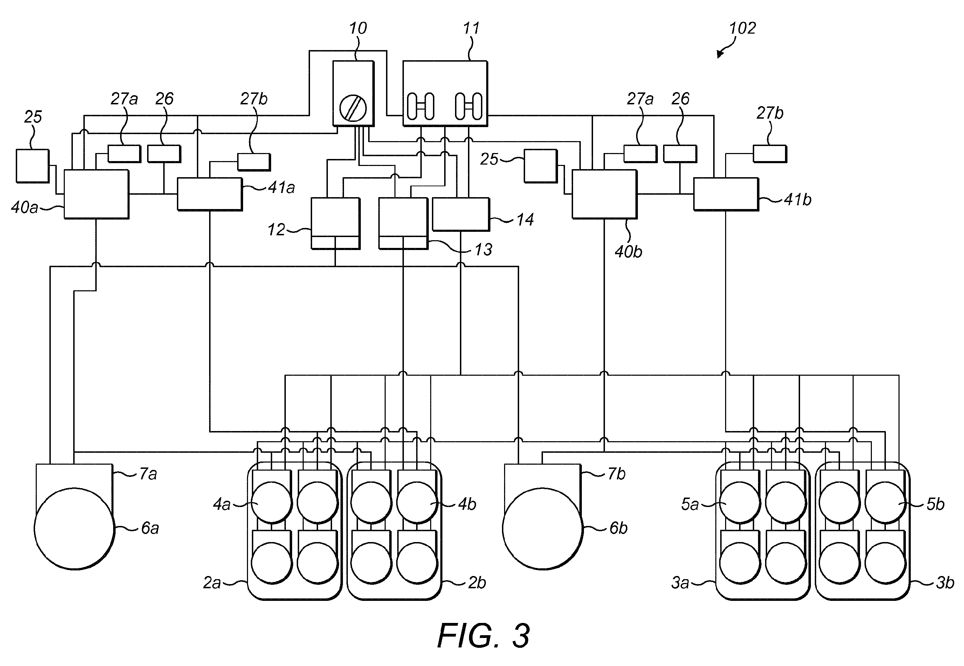

A schematic diagram of an aircraft landing gear system for an aircraft in accordance with another embodiment of the invention is now described with reference to Figure 3. Again, the aircraft landing gear system 102 is similar to the aircraft landing gear systems 100 and 101 of the previous embodiments, and comprises the same braking systems, drive systems, controls and the like.

In the present embodiment, the drive system comprising the motor drive 7a is powered by a PSU 40a, which again provides a high-voltage 270V DC supply. The PSU 40a receives as input the AC power supply 25 from the auxiliary power supply, the AC power supply 27a generated by the first of the engines of the aircraft when running, and the standard operating AC power supply 26. The PSU 40a also provides power to two brakes of each of the braking systems 2a and 2b.

A high-voltage 270V DC supply of power is supplied to the other two of the four brakes each of the braking systems 4a and 4b comprises by a second PSU 41a. The second PSU 41a takes the AC power supply 27b generated by the second of the engines of the aircraft when running, and also the standard operating AC power supply 26.

In a similar fashion, the drive system comprising the motor drive 7b is powered by a PSU 40b which again provides a high-voltage 270V DC supply, generated from the AC power supply 25 from the auxiliary power supply, the AC power supply 27a generated by the first of the engines of the aircraft when running, and the standard operating AC power supply 26. The PSU 40b also provides power to two brakes of each of the braking systems 3a and 3b. A high-voltage 270V DC supply of power is supplied by a second PSU 41b to the other two of the four brakes of each of the braking systems 5a and 5b. The PSU 41b takes as input the AC power supply 27b generated by the second of the engines of the aircraft when running, and the standard operating AC power supply 26.

In this way, a more symmetrical system is provided which allows more sharing conductors and the like, but at the expense of the system requiring more changes from a standard electrically powered wheel drive system.

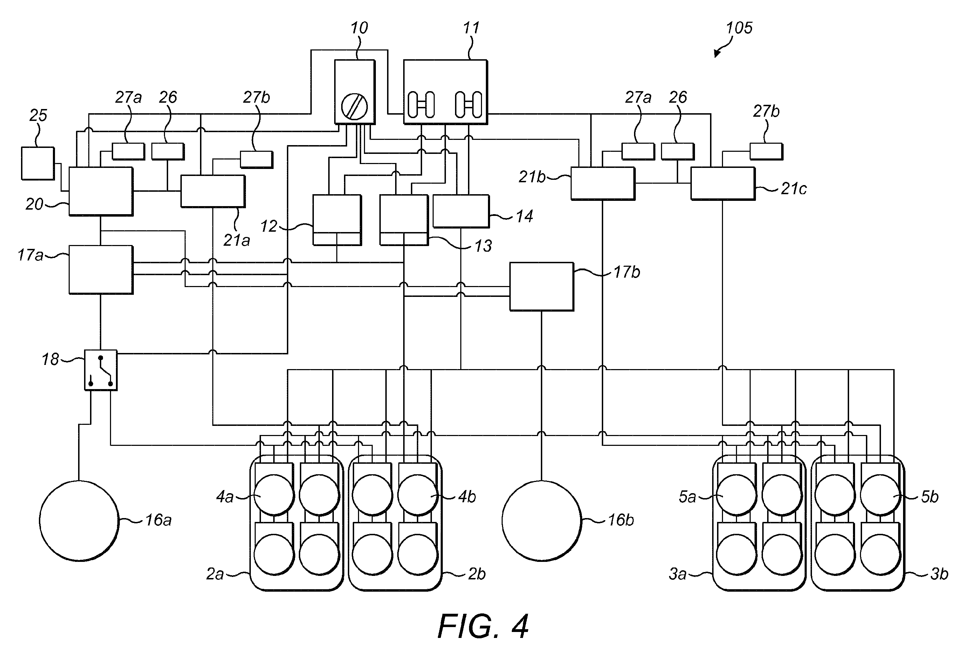

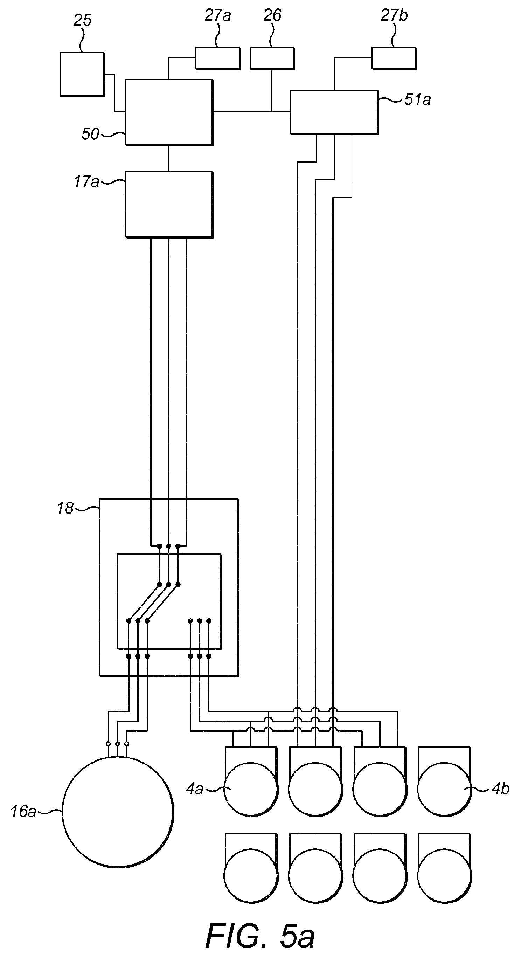

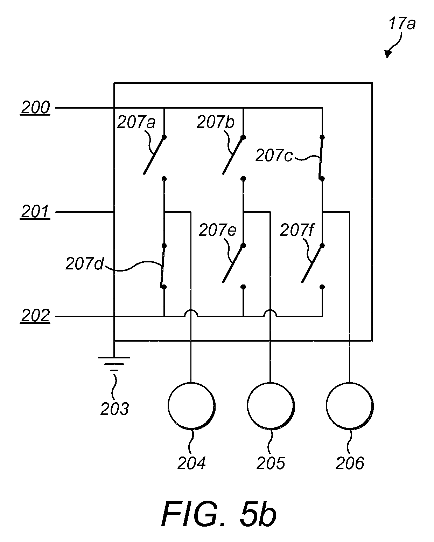

A schematic diagram of an aircraft landing gear system for an aircraft in accordance with another embodiment of the invention is now described with reference to Figures 4, 5a and 5b. The aircraft landing gear system 105 of the present embodiment is in particular similar to the aircraft landing gear systems 100 of the first embodiment, and comprises the same PSUs, braking systems, controls and the like. However, in this embodiment the drive systems of aircraft landing gear system 105 comprises motors 16a and 16b with separate respective motor drives as described in more detail below. In other words, the aircraft landing gear system 105 does not have the LRU drive systems of the previous embodiments, but more conventional wheel drive systems in which the motors 16a and 16b are brushless motors that require a three-phase AC power supply, provided by separate motor drives. The motors 16a and 16b are mounted at the wheels 2a, 2b, 2c and 2d of the aircraft landing gear system 105, with the required conductors running down the legs of the aircraft landing gear from the motor drives that provide the required three-phase AC power supply.

In the present embodiment, power is supplied to the drive systems and braking systems by the same set of PSUs 20, 21a, 21b and 21c. However, in the present embodiment the high-voltage 270V DC supply generated by the PSU 20 is passed to a dual motor/brake drive 17a, which is discussed below. The high-voltage 270V DC supply generated by the PSU 20 is also passed to a conventional motor drive 17b which drives the motor 16b.

The dual motor/brake drive 17a is shown in more detail in Figure 5b. The dual motor/brake drive 17a takes as input a positive DC supply 200, neutral supply 201, and negative DC supply 202. The dual motor/brake drive 17a is also connected to ground 203. The dual motor/brake drive 17a comprises switches 207a to 207f, which allow the inputs 200, 201 and 202 to be connected as desired to outputs 204, 205 and 206, which allows the dual motor/brake drive 17a to be operated in different modes, as described later below.

The outputs 204, 205 and 206 of the dual motor/brake drive 17a are connected to a selector switch 18, which can connect them to either the motor 16a, or to the two brakes of each of the braking systems 4a and 4b.

As in the aircraft landing gear system 100 of the first embodiment, the PSUs 21a, 21b and 21c each supply power to two brakes of the braking systems 2a, 2b, 3a and 3b.

The operation of the aircraft landing gear system 105, and in particular the dual motor/brake drive 17a and selector switch 18 thereof, is as follows.

When the mode selector switch 10 is set to OFF or PARK, the braking system will be in operation and the drive system will not be operated. In this case, the dual motor/brake drive 17a will be set so that the switches 207c and 207d (only) are closed, as shown in Figure 5b, so that the positive DC supply 200 is passed to the output 206, and the negative DC supply 202 is passed to the output 204. Further, the selector switch 18 will be set to connect the output of the dual motor/brake drive 17a to the two brakes of each of the braking systems 4a and 4b. In this way, the brakes of the braking systems 4a and 4b receive the high-voltage 270V DC supply from the PSU 20 that they require for their operation.

If, on the other hand, the selector switch 10 is set to FWD or RVS, the drive system will be in operation and the braking system will not be operated. In this case, the switches 207a to 207fwill be opened and closed in a suitable sequence so that the three-phase AC power supply required by the brushless motor 16a is generated from the positive DC supply 200, neutral supply 201 and negative DC supply 202 at the outputs 204, 205 and 206. (The generation of an AC supply for a brushless motor in such a way is well known.) It will be appreciated that the dual motor/brake drive 17a will also contain other control circuity necessary to provide the required power level for the required motor torque and so on.

In this way, the PSU 20 can provide power to both the drive systems and brake systems, despite the brake systems 4a, 4b, 5a and 5b being LRUs that require a high-voltage 270V DC supply, while the motors 16a and 16b are conventional brushless motors that require a three-phase AC power supply.

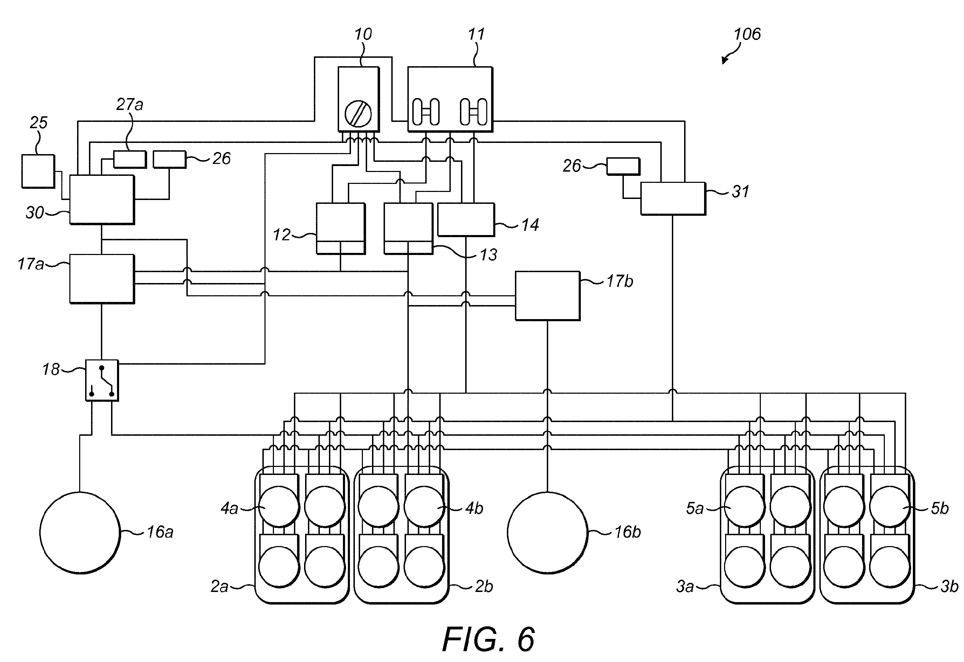

A schematic diagram of an aircraft landing gear system for an aircraft in accordance with another embodiment of the invention is now described with reference to Figure 6. The aircraft landing gear system 106 of the present embodiment is similar to the aircraft landing gear systems 101 of the second embodiment, but again with drive systems comprising brushless motors 16a and 16b with separate respective motor drives 17a and 17b.

In the present embodiment, the PSU 30 provides power to the dual motor/brake drive 17a, which provides power via the selector switch 18 to either the motor 16a or the brakes of each of the brake systems 4a, 4b, 5a and 5b. The PSU 30 also provides power to the conventional motor drive 17b to drive the motor 16b. As in the aircraft landing gear system 101 of the second embodiment, the PSU 31 also provides power to the brakes of each of the brake systems 4a, 4b, 5a and 5b.

In this way, the aircraft landing gear system 106 provides power to the brake systems 4a, 4b, 5a and 5b that require a high-voltage 270V DC supply, and to the motors 16a and 16b that require a three-phase AC power supply, using only the two PSUs 30 and 31.

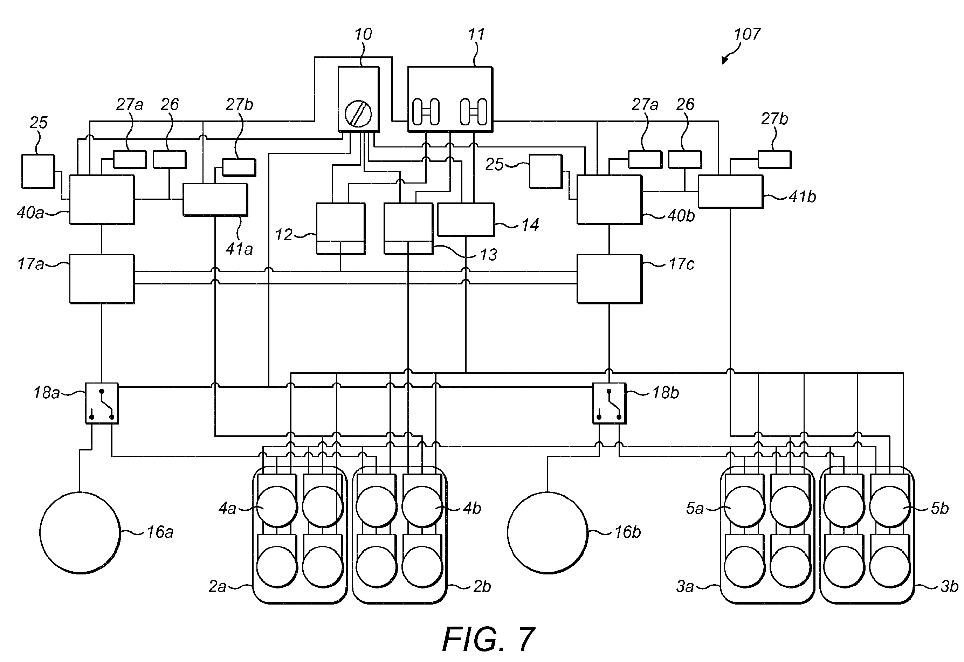

A schematic diagram of an aircraft landing gear system for an aircraft in accordance with another embodiment of the invention is now described with reference to Figure 7. The aircraft landing gear system 107 of the present embodiment is similar to the aircraft landing gear systems 102 of the third embodiment, but again with drive systems comprising brushless motors 16a and 16b with separate respective motor drives 17a and 17b.

In the present embodiment, the PSU 40a provides power to the dual motor/brake drive 17a, which provides power via a selector switch 18a to either the motor 16a or two brakes of each of the brake systems 4a and 4b. The PSU 41 a provides power to the other two brakes of the brake systems 4a and 4b.

Similarly, the PSU 40b provides power to a second dual motor/brake drive 17b, which provides power via a second selector switch 18b to either the motor 16b or two brakes of each of the brake systems 5a and 5b. The second dual motor/brake drive 17b and second selector switch 18b operate in the same way as the first dual motor/brake drive 17a and second selector switch 18a. The PSU 41b provides power to the other two brakes of the brake systems 5a and 5b.

In this way, a more symmetrical system is provided, but in which power is provided to the brake systems 4a, 4b, 5a and 5b that require a high-voltage 270V DC supply, and to the motors 16a and 16b that require a three-phase AC power supply.

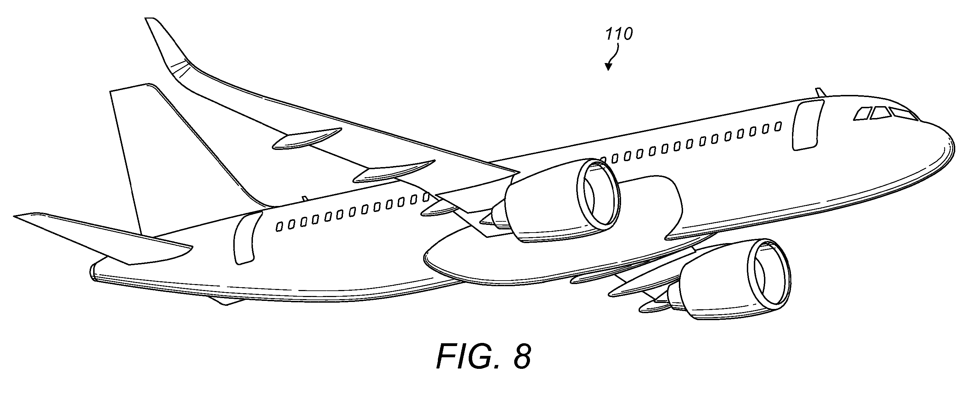

Figure 8 shows an aircraft incorporating an aircraft landing gear system as described above.

While the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft landing gear for an aircraft, comprising:
a plurality of wheels;
an electrically powered drive system comprising a drive motor arranged to drive at least one of the plurality of wheels;
an electrically powered braking system comprising a brake arranged to brake at least one of the plurality of wheels;
a power supply unit arranged to provide a supply of power to the electrically powered drive system;
wherein the power supply unit is further arranged to provide a supply of power to the electrically powered braking system.

2. An aircraft landing gear as claimed in claim 1, wherein the power supply unit is arranged to receive a supply of power generated from the engines of the aircraft.

3. An aircraft landing gear as claimed in claim 1 or 2, wherein the power supply unit is arranged to receive a supply of power from a battery.

4. An aircraft landing gear as claimed in any preceding claim, wherein the electrically powered braking system comprises a brake control unit arranged to operate the brakes of the electrically powered braking system, wherein the brake control unit is arranged to receive a DC voltage power supply from the power supply unit.

5. An aircraft landing gear as claimed in any preceding claim, wherein the electrically powered drive system comprises a drive control unit arranged to operate the drive motor of the electrically powered drive system, wherein the drive control unit is arranged to receive a DC voltage power supply from the power supply unit.

6. An aircraft landing gear as claimed in any of claims 1 to 4, wherein the electrically powered drive system is arranged to receive a multi-phase AC voltage power supply from the power supply unit to operate the drive motor of the electrically powered drive system.

7. An aircraft landing gear as claimed in claim 5, wherein the power supply unit is arranged to be switchable between a first mode in which it supplies a DC voltage power supply to the electrically powered braking system, and a second mode in which it supplies a multi-phase AC voltage power supply to the electrically powered drive system.

8. An aircraft landing gear as claimed in any preceding claim, comprising a plurality of electrically powered braking systems and a corresponding plurality of power supply units, wherein each electrically powered braking system of the plurality of electrically powered braking systems receives a supply of power from a respective power supply unit of the plurality of power supply units.

9. An aircraft landing gear as claimed in claim 8, comprising a plurality of electrically powered drive systems.

10. An aircraft landing gear as claimed in claim 9, wherein each drive system of the plurality of electrically powered drive systems receives power from a first power supply unit of the plurality of power supply units.

11. An aircraft landing gear as claimed in claim 9, wherein each drive system of the plurality of electrically powered drive systems receives a supply of power from a respective power supply unit of the plurality of power supply units.

12. An aircraft comprising an aircraft landing gear according to any preceding claim.

13. An aircraft comprising:
a power supply unit;
a first and a second aircraft landing gear, each of the first and second landing gear comprising:
a plurality of wheels;
an electrically powered drive system comprising a drive motor arranged to drive at least one of the plurality of wheels;
an electrically powered braking system comprising a brake arranged to brake at least one of the plurality of wheels;
wherein the power supply unit is further arranged to provide a supply of power to the electrically powered drive system of the first aircraft landing gear and to the electrically powered drive system of the second aircraft landing gear, and wherein the power supply unit is arranged to provide a supply of power to the electrically powered braking system of the first aircraft landing gear.

14. An aircraft as claimed in claim 13, wherein the power supply unit is further arranged to provide a supply of power to the electrically powered braking system of the second aircraft landing gear.

15. An aircraft as claimed in claim 13 or 14, wherein the electrically powered drive systems of the first and second aircraft landing gears are arranged to receive a multi-phase AC voltage power supply from the power supply unit to operate the drive motors of the electrically powered drive systems.

16. An aircraft as claimed in claim 15, wherein the power supply unit is arranged to be switchable between a first mode in which it supplies a DC voltage power supply to the electrically powered braking system or electrically powered braking systems, and a second mode in which it supplies a multi-phase AC voltage power supply to the electrically powered drive systems.
